# EUROPEAN PATENT APPLICATION

(11) **EP 3 147 461 A1**
(43) Date of publication of application: **29.03.2017**
(21) Application number: 16189789.7
(22) Date of filing: 20.09.2016
(51) Int. Cl.: F01D 11/00, F16J 15/08

(54) **GAS TURBINE ENGINE ANNULAR SPRING SEAL AND CORRESPONDING SEAL ASSEMBLY**

(30) Priority: 24.09.2015 US 201514864221
(71) Applicant: General Electric Company, Schenectady, NY 12345 (US)
(72) Inventor: BROOMER, Mark, Cincinnati, OH 45215 (US); SEVINCER, Edip, Cincinnati, OH 45215 (US); MARIN, Anthony Christopher, Cincinnati, OH 45215 (US)
(74) Representative: Williams, Andrew Richard

(57) **Abstract**

Snap in annular spring seal (52) including continuous or split full 360 degree ring (79) having radially outer second seal end (55) spaced outwardly of a radially inner first end (53) of the ring (79) and axial biasing means urging first and second seal ends (55, 53) apart. Biasing means may include an axially aftwardly opening conical section (70) connecting first and second seal ends (55, 53) and second seal end (55) having outer aftwardly opening V shaped cross-sectional bend (66) or circular cross-sectional bend (67). Spring seal (52) may extend radially and circumferentially between and in sealing engagement with first and second annular turbine components (4, 6). First end (53) may be spring-loaded and removably secured in U-shaped or V-shaped slot (54) of turbine component. Slot (54) may include symmetrical inner U-shaped bent first seal end (83) including annular substantially parallel or non-parallel forward and aft legs (56, 58) connected by semi-circular cross-sectional bend (60). Seal (52) may include bowed section (80) connecting circular seal ends (55, 53).

## Description

### TECHNICAL FIELD

The present invention relates generally to gas turbine engine turbine flowpath seals and, more specifically, to spring seals for sealing between turbine components or elements.

### BACKGROUND INFORMATION

Gas turbine engine high pressure turbines typically include turbine nozzles downstream of turbine shrouds that are separately manufactured and assembled into position in the engine. Accordingly, gaps are necessarily provided therebetween for both assembly purposes as well as for accommodating differential thermal expansion and contraction during operation of the engine. Gaps between these stationary stator components are suitably sealed for preventing leakage therethrough. In a typical high pressure turbine nozzle, a portion of the compressor air is bled and channeled through the nozzle vanes for cooling thereof. The use of bleed air reduces the overall efficiency of the engine and, therefore, is minimized whenever possible. The bleed air is at a relatively high pressure greater than the pressure of the combustion gases flowing through the turbine nozzle and, therefore, would leak into the exhaust flowpath without providing suitable seals between the stator components.

Arcuate leaf seals are particularly useful to seal these gaps in the turbine flowpaths between turbine nozzles and shrouds. The leaf seals typically used in such applications are arcuate and disposed end to end around the circumference of the stator components which are segmented. For example, the radially outer band of the turbine nozzle includes axially spaced apart forward and aft rails. These rails extend radially outwardly with the aft rail abutting a complementary surface on the adjoining shroud or shroud hanger for providing a primary friction seal therewith.

W-seals and C-seals are typically loose in a cavity formed by interfacing hardware. Assembly forces can damage seals during installation. Seals can also be inadvertently left out of assemblies.

Mounting arrangements for the leaf seals are relatively complex and subject to damage during the assembly process in view of the relatively close quarters in this region. A smaller and less complex seal is desired for simplifying the manufacture and assembly thereof and eliminating pinching and damage that may occur during assembly.

### BRIEF DESCRIPTION

A gas turbine engine snap in annular spring seal includes a continuous or split full 360 degree ring circumscribed about a centerline axis. The ring having a radially outer second seal end spaced radially outwardly of a radially inner first end of the ring and an axial biasing means for axially biasing the second seal end apart and away from the first end.

The axial biasing means may include an axially aftwardly opening conical section connecting the first and second seal ends. The second seal end may include a radially outer aftwardly opening V-shaped cross-sectional bend or a circular cross-sectional bend.

The first end may include a radially inner V-shaped acute cross-sectional bend, the radially inner V-shaped acute cross-sectional bend may include an annular axially forward leg connected to an axially aftwardly opening conical connecting section and the axially aftwardly opening conical connecting section may be connected to the axially aftwardly opening conical section by a forwardly opening conical intermediate section.

In another aspect of the seal, the first end may include a symmetrical radially inner U-shaped bent first seal end, the U-shaped first seal end may include annular substantially parallel or non-parallel axially spaced apart forward and aft legs connected by a semi-circular cross-sectional bend or cross-sectional U bend therebetween, the second seal end may include a radially outer aftwardly opening V-shaped cross-sectional bend or a circular cross-sectional bend, and an axially aftwardly opening conical section may be located radially between and connected to the aft leg and the first seal end.

In yet another aspect of the seal, the first and second seal ends are axially and radially circular in cross-section with respect to the centerline axis and the axial biasing means including a radially inwardly and axially aftwardly bowed section connecting the first and second seal ends.

An annular seal assembly may include a gas turbine engine snap in annular spring seal extending radially and circumferentially between and in sealing engagement with first and second annular turbine components. The first end may be spring-loaded and revolvably secured in at least one cross-sectionally U-shaped or V-shaped slot of the first turbine component. The first end may be spring-loaded against and between parallel or non-parallel forward and aft annular walls of the U-shaped or V-shaped slot of the first turbine component wherein the aft annular wall is continuous and the forward annular wall is continuous or discontinuous. The discontinuous forward annular wall may include circumferentially spaced apart tabs spaced axially apart from the continuous aft annular wall.

Another aspect of the annular seal assembly includes a gas turbine engine snap in annular spring seal extending radially and circumferentially between and in sealing engagement with a high pressure turbine nozzle including turbine nozzle segments and a stationary shroud assembly including turbine shroud segments.

### BRIEF DESCRIPTION OF THE DRAWINGS

The invention, in accordance with preferred and exemplary embodiments, is more particularly described in the following detailed description taken in conjunction with the accompanying drawings in which:
FIG. 1 is a sectional illustration of a first exemplary gas turbine engine snap in annular seal having a first end spring-loaded in a U-shaped slot of a first component and a second end spring-loaded against a second component.
FIG. 1A is a sectional illustration of an exemplary gas turbine engine snap in annular seal having a first end spring-loaded in a V-shaped slot of a first component and a second end spring-loaded against a second component and radially inwardly and axially aftwardly bowed section connecting the first and second ends.
FIG. 1B is a sectional illustration of an exemplary gas turbine engine snap in annular seal having a first end spring-loaded in a U-shaped slot of a first component and a second end spring-loaded against a second component and radially inwardly and axially aftwardly bowed section connecting the first and second ends.
FIG. 2 is a sectional view illustration of a second exemplary gas turbine engine sprung seal having a first end spring-loaded in a U-shaped slot of a first component and a second end spring-loaded against a second component.
FIG. 2A is a perspective view illustration of tabs used to hold the second exemplary gas turbine engine sprung seal illustrated in FIG. 2.
FIG. 3 is an axial view illustration of the exemplary embodiment of the seal illustrated in FIG. 2.
FIG. 4 is a circumferential view illustration of the seal through 4-4 in FIG. 3.
FIG. 5 is a schematical view illustration of an aircraft turbofan gas turbine engine with the snap in annular seal illustrated in FIG. 1 between a turbine nozzle and axially adjacent turbine shroud assembly.
FIG. 6 is an enlarged perspective view illustration of the snap in annular seal illustrated between the turbine nozzle and axially adjacent turbine shroud assembly illustrated in FIG. 5.

### DETAILED DESCRIPTION

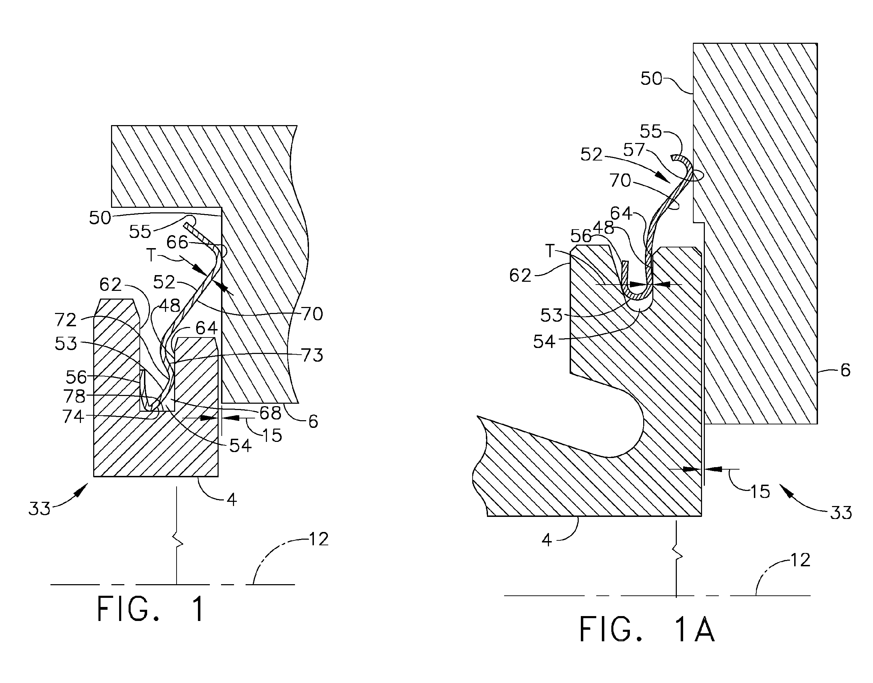

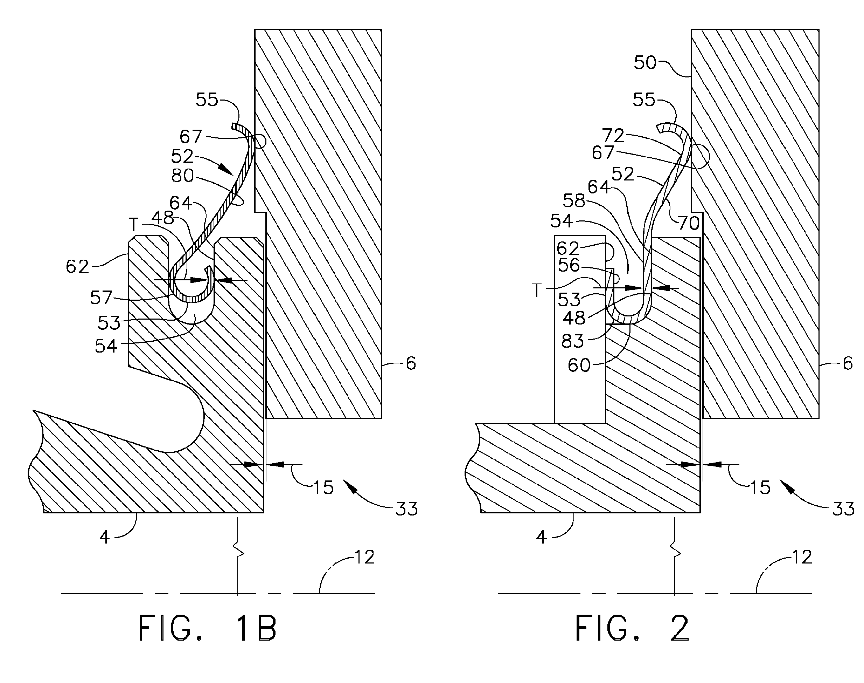

Illustrated in FIGS. 1-4 is a gas turbine engine annular seal assembly 33 including a snap in annular spring seal 52 extending radially and circumferentially between and in sealing engagement with first and second annular turbine components 4, 6 circumscribed about a centerline axis 12. The seal assembly 33 is designed to prevent or inhibit leakage through a gap 15 between the first and second turbine components 4, 6 of a gas turbine engine. Gas turbine engines include aircraft, marine, and industrial gas turbine engines.

The snap in annular spring seal 52 includes a radially inner first seal end 53 spring-loaded and revolvably secured in at least one slot 54 of the first turbine component 4. Thus the first seal end 53 is in sealing engagement against an aft facing first sealing surface 48 on the first turbine component 4. The exemplary slot 54 illustrated in FIG. 1 is cross-sectionally U-shaped. The inner first seal end 53 is spring-loaded against and between parallel forward and aft annular walls 62, 64 of the U-shaped slot 54 of the first turbine component 4. An alternatively shaped exemplary slot 54 illustrated in FIG. 1A is cross-sectionally V-shaped and an inner first seal end 53 is spring-loaded against and between non-parallel forward and aft annular walls 62, 64 of the V-shaped slot 54 of the first turbine component 4.

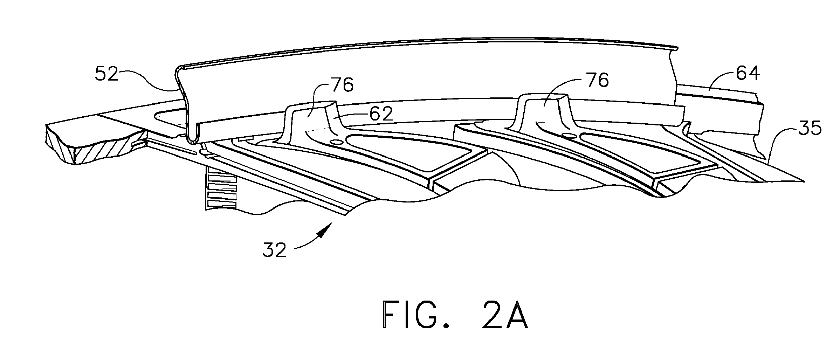

The annular snap in spring seal 52 includes a radially outer second seal end 55 spaced radially outwardly of the first end 53. The second seal end 55 is connected to the first end 53 by an axially aftwardly opening conical section 70. The conical section 70 provides an axial biasing means for axially biasing or urging the second seal end 55 apart and away from the first end 53 and in sealing engagement against an aft facing second sealing surface 50 on the second component 6. The radially outer second seal end 55 is spring-loaded and in sealing engagement against the second component 6. The second seal end 55 may include a radially outer aftwardly opening V-shaped cross-sectional bend 66 in sealing engagement and contact with the second component 6 as illustrated in FIG. 1 or a more rounded circular cross-sectional bend 67 as illustrated in FIG. 2.

The annular snap in spring seal 52 further includes an axially aftwardly opening conical section 70 located radially between and connected to the radially outer aftwardly opening V-shaped cross-sectional bend 66 and a radially inner V-shaped cross-sectional bend 68 at a radially outer end 72 of the first seal end 53. The annular snap in spring seal 52 is able to conform to the at least one U-shaped slot 54 of the first turbine component 4 and flexibly seal against the second component 6. The spring seal 52 may be made of a variety of metallic materials including but not limited to Inconel Alloy X750, Rene 41, Inconel Alloy 718, Inconel Alloy 625, and Waspaloy. The spring seal 52 may have a range of thickness and stiffness. The spring seal 52 may have a thickness T in a range of from .002 inches - .030 inches.

A first exemplary embodiment of the annular snap in spring seal 52 illustrated in FIG. 1 includes a non-symmetrical radially inner first seal end 53 spring-loaded and revolvably secured in the at least one U-shaped slot 54. The U-shaped slot 54 includes parallel forward and aft walls 62, 64. The first seal end 53 includes an annular axially forward leg 56 that rests parallel to and against the forward wall 62. The radially inner V-shaped cross-sectional bend 68 includes an axially aftwardly opening conical connecting section 74 axially aft of and connected to the axially forward leg 56. The axially aftwardly opening conical connecting section 74 is connected to the axially aftwardly opening conical section 70 by a forwardly opening conical intermediate section 73. The conical connecting section 74 may be caddy-corner to both the aft annular wall 64 and a cylindrical bottom wall 78 of the U-shaped slot 54. The shape of the first end 53 is designed to provide a strong spring force within the at least one U-shaped slot 54 and be easily removed from the slot. The first end 53 is spring-loaded against and between parallel forward and aft annular walls 62, 64 of the U-shaped slot 54 of the first turbine component 4.

Another exemplary embodiment of the annular snap in spring seal 52 illustrated in FIG. 1B includes a radially inner circular cross-sectional first seal end 53 spring-loaded and revolvably secured in the at least one U-shaped slot 54. A radially outer circular cross-sectional second seal end 55 is spaced radially outwardly of the first end 53. The first end 53 is spring-loaded against and between parallel forward and aft annular walls 62, 64 of the U-shaped slot 54 of the first turbine component 4. The second seal end 55 is connected to the first end 53 by a radially inwardly and axially aftwardly bowed section 80. The bowed section 80 provides an axial biasing means for axially biasing or urging the second seal end 55 apart and away from the first end 53 and in sealing engagement against the second component 6. The radially inner circular cross-sectional first seal end 53 and the radially outer circular cross-sectional second seal end 55 have axially and radially extending circular cross-sections 57.

A second exemplary embodiment of the annular snap in spring seal 52 illustrated in FIG. 2 includes the first seal end 53 having a symmetrical radially inner U-shaped bent first seal end 83 spring-loaded and revolvably secured in the at least one U-shaped slot 54. The U-shaped first seal end 83 incudes annular substantially parallel annular axially spaced apart forward and aft legs 56, 58 connected by a cross-sectional U bend 60 or semi-circular cross-sectional bend therebetween. The parallel forward and aft legs 56, 58 are spring-loaded against parallel forward and aft walls 62, 64 respectively of the U-shaped slot 54 of the first turbine component 4. The aft leg 58 may be longer than the forward leg 56. An axially aftwardly opening conical section 70 is located radially between and connected to the aft leg 58 and a radially inner end of the first seal end 53.

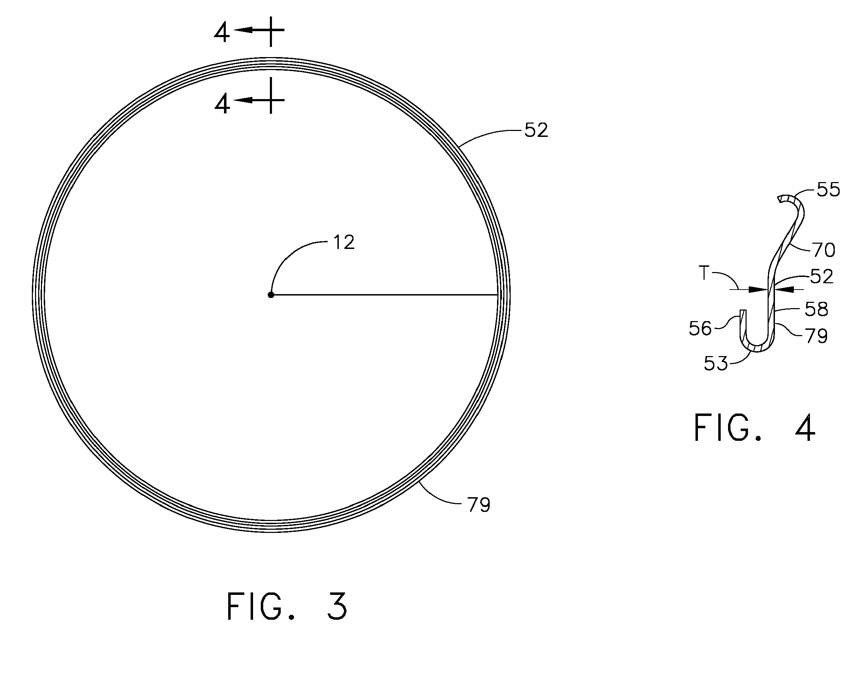

The U-shaped slot 54 and the forward annular wall 62 may be continuous around the engine and components as illustrated in FIG. 1. The U-shaped slot 54 may be continuous and segmented also. The U-shaped slot 54 may be discontinuous around the engine and components as illustrated in FIGS. 2 and 2A. The forward annular wall 62 may be discontinuous around the engine and include circumferentially spaced apart tabs 76 spaced axially apart from a continuous aft annular wall 64 of the U-shaped slot 54 as illustrated in FIGS. 2 and 2A. The continuous aft annular wall 64 provides a sealing surface. The annular snap in spring seal 52 is a full 360 degree ring 79 as illustrated in FIGS. 3 and 4 and may be split.

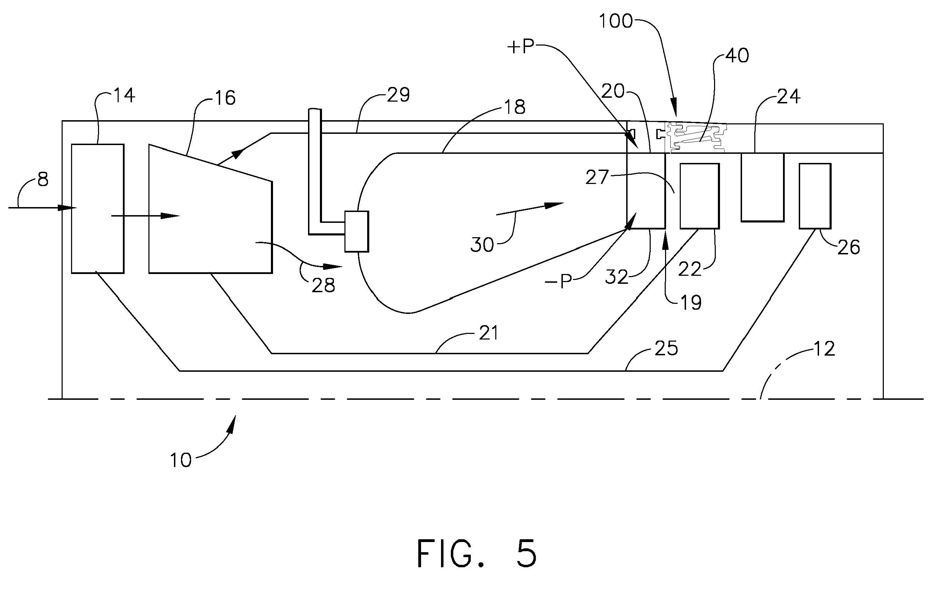

Illustrated schematically in FIG. 5 is an exemplary aircraft turbofan gas turbine engine 10 which is axisymmetrical about a longitudinal or axial centerline axis 12. The engine 10 includes in serial flow communication, a fan 14, multi-stage axial compressor 16, annular combustor 18, a high pressure turbine 19 including a high pressure turbine nozzle 20 upstream of and followed by a single stage high pressure turbine rotor 22, and one or more stages of low pressure turbine nozzles 24 and rotors 26. The high pressure turbine rotor 22 is joined to the compressor 16 by a first shaft 21 and the low pressure rotor 26 is joined to the fan 14 by a coaxial second shaft 25. During operation, ambient air 8 flows downstream through the fan 14, the compressor 16 from where it exits as compressed air 28 and is then flowed into the combustor 18. The compressed air 28 is mixed with fuel and ignited in the combustor 18 generating hot combustion gases 30 which flow downstream through turbine stages which extract energy therefrom for powering both the fan 14 and the compressor 16. The various stator and rotor components of the turbines downstream from the combustor 18 define a turbine flowpath 27 which channels the hot combustion gases therethrough for discharge from the engine.

Downstream of and adjacent to the high pressure turbine nozzle 20 is the high pressure turbine rotor 22. The high pressure turbine rotor 22 may take any conventional form having a plurality of circumferentially spaced apart turbine blades 23 extending radially outwardly from a rotor disk for extracting energy from the gases 30 and powering the compressor 16. A stationary shroud assembly 100, including turbine shroud segments 40, is located adjacent to and downstream of the turbine nozzle 20.

A portion of the compressed air 28 is bled from the compressor 16 and used as cooling air 29 which is channeled to various parts of the turbines such as the high pressure nozzle 20 to provide cooling thereof. Some of the cooling air 29 is channeled around and through the high pressure turbine nozzle 20 at a substantially high pressure +P compared to the low pressure -P of the combustion gases 30 flowing through the turbine flowpath 27 in the high pressure turbine nozzle 20 during engine operation.

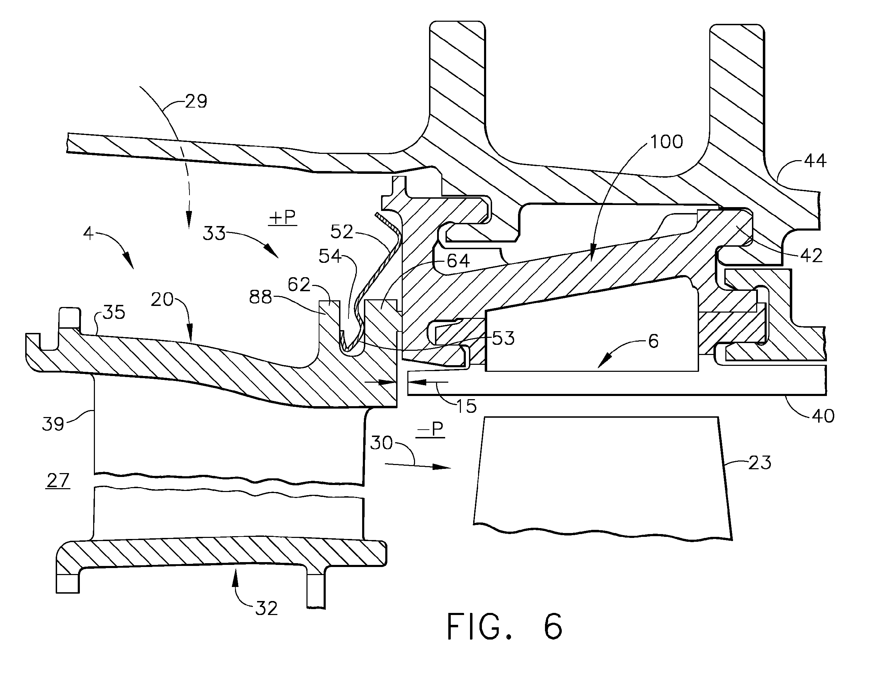

Illustrated in FIG. 6 is an annular seal assembly 33 including an annular snap in spring seal 52 extending radially and circumferentially between and in sealing engagement with first and second annular turbine components which are a high pressure turbine nozzle 20 including turbine nozzle segments 32 and a stationary shroud assembly 100 including turbine shroud segments 40. The stationary shroud assembly 100 is located adjacent to axially downstream of the turbine nozzle 20 and bounds and confines flowpath 27 radially outwardly of the turbine blades 23. The stationary shroud assembly 100 is made from a ring or plurality of circumferentially adjoining arcuate turbine shroud segments 40 supported from a plurality of circumferentially adjoining shroud hangers 42, which in turn, are supported from an annular outer casing 44 using forward and aft hooks and retention clips. The shroud segments 40 and hangers 42 are disposed coaxially with the turbine nozzle 20 for defining a radially outer flowpath boundary around the turbine blades 23 through which the combustion gases 30 flow from the nozzle 20.

The cooling air 29 is channeled around the nozzle 20 and flows radially inwardly through the individual hollow stator airfoils 39 of the turbine nozzle 20 for cooling thereof and circulates around the outer surface of the outer band 35. The cooling air 29 is at a relatively high pressure +P compared to the lowered pressure -P of the combustion gases 30 channeled through the nozzle 20.

The seal assembly 33 includes a U-shaped slot 54 in an aft flange 88 on each of the turbine nozzle segments 32 and parallel forward and aft walls 62, 64 of the slot. The annular snap in spring seal 52 designed to prevent or inhibit leakage through a gap 15 between the turbine nozzle 20 and the stationary shroud assembly 100. The annular snap in spring seal 52 includes a radially inner first seal end 53 spring-loaded and revolvably secured in at least one U-shaped slot 54 of the first turbine component 4. The first end 53 is spring-loaded against and between the parallel forward and aft annular walls 62, 64 of the U-shaped slot 54.

The annular snap in spring seal 52 has a low profile snap in 360 degree axisymmetric construction and shape. No rivets or bolts are required which improves durability of the assembly and the turbine nozzle, reduces leak paths, and allows modular assembly.

Integrating or fastening an inter-module seal mitigates the risk of assembly damage. The low profile snap in cavity in conjunction with a 360 degree axisymmetric seal offers improved part durability and reduced leakage over headed or riveted attached seals.

While there have been described herein what are considered to be preferred and exemplary embodiments of the present invention, other modifications of the invention shall be apparent to those skilled in the art from the teachings herein, and it is, therefore, desired to be secured in the appended claims all such modifications as fall within the scope of the invention.

Various aspects and embodiments of the present invention are defined by the following numbered clauses:
1. A gas turbine engine snap in annular spring seal comprising:
   a continuous or split full 360 degree ring circumscribed about a centerline axis,
   the ring including a radially outer second seal end spaced radially outwardly of a radially inner first end of the ring, and
   an axial biasing means for axially biasing the second seal end apart and away from the first end.
2. The seal as claimed in clause 1, further comprising the axial biasing means including an axially aftwardly opening conical section connecting the first and second seal ends.
3. The seal as claimed in any preceding clause, further comprising the second seal end including a radially outer aftwardly opening V-shaped cross-sectional bend or a circular cross-sectional bend.
4. The seal as claimed in any preceding clause, further comprising:
   the first end including a radially inner V-shaped acute cross-sectional bend,
   the radially inner V-shaped acute cross-sectional bend including an annular axially forward leg connected to an axially aftwardly opening conical connecting section, and
   the axially aftwardly opening conical connecting section connected to the axially aftwardly opening conical section by a forwardly opening conical intermediate section.
5. The seal as claimed in any preceding clause, further comprising:
   the first end including a symmetrical radially inner U-shaped bent first seal end,
   the U-shaped first seal end including annular substantially parallel axially spaced apart forward and aft legs connected by a semi-circular cross-sectional bend or cross-sectional U bend therebetween,
   the second seal end including a radially outer aftwardly opening V-shaped cross-sectional bend or a circular cross-sectional bend, and
   an axially aftwardly opening conical section located radially between and connected to the aft leg and the first seal end.
6. The seal as claimed in any preceding clause, further comprising the axial biasing means including a radially inwardly and axially aftwardly bowed section connecting the first and second seal ends and the first and second seal ends being axially and radially circular in cross-section with respect to the centerline axis.
7. An annular seal assembly comprising:
   a gas turbine engine snap in annular spring seal extending radially and circumferentially between and in sealing engagement with first and second annular turbine components,
   the annular spring seal including a continuous or split full 360 degree ring circumscribed about a centerline axis,
   the ring including a radially outer second seal end spaced radially outwardly of a radially inner first end of the ring, and
   an axial biasing means for axially biasing the second seal end apart and away from the first end.
8. The assembly as claimed in any preceding clause, further comprising the first end spring-loaded and revolvably secured in at least one cross-sectionally U-shaped slot of the first turbine component.
9. The assembly as claimed in any preceding clause, further comprising the axial biasing means including an axially aftwardly opening conical section connecting the first and second seal ends.
10. The assembly as claimed in any preceding clause, further comprising:
   the second seal end including a radially outer aftwardly opening V-shaped cross-sectional bend or a circular cross-sectional bend,
   the first end including a radially inner V-shaped acute cross-sectional bend,
   the radially inner V-shaped acute cross-sectional bend including an annular axially forward leg connected to an axially aftwardly opening conical connecting section, and
   the axially aftwardly opening conical connecting section connected to the axially aftwardly opening conical section by a forwardly opening conical intermediate section.
11. The assembly as claimed in any preceding clause, further comprising:
   the first end including a symmetrical radially inner U-shaped bent first seal end,
   the U-shaped first seal end including annular substantially parallel axially spaced apart forward and aft legs connected by a semi-circular cross-sectional bend or cross-sectional U bend therebetween,
   the second seal end including a radially outer aftwardly opening V-shaped cross-sectional bend or a circular cross-sectional bend, and
   an axially aftwardly opening conical section located radially between and connected to the aft leg and the first seal end.
12. The assembly as claimed in any preceding clause, further comprising:
   the first end spring-loaded against and between parallel forward and aft annular walls of the U-shaped slot of the first turbine component,
   the aft annular wall being continuous, and
   the forward annular wall being continuous or the forward annular wall being discontinuous and including circumferentially spaced apart tabs spaced axially apart from the continuous aft annular wall.
13. The assembly as claimed in any preceding clause, further comprising the axial biasing means including a radially inwardly and axially aftwardly bowed section connecting the first and second seal ends and the first and second seal ends being axially and radially circular in cross-section with respect to the centerline axis.
14. An annular seal assembly comprising:
   a gas turbine engine snap in annular spring seal extending radially and circumferentially between and in sealing engagement with a high pressure turbine nozzle including turbine nozzle segments and a stationary shroud assembly including turbine shroud segments,
   the annular spring seal including a continuous or split full 360 degree ring circumscribed about a centerline axis,
   the ring including a radially outer second seal end spaced radially outwardly of a radially inner first end of the ring, and
   an axial biasing means for axially biasing the second seal end apart and away from the first end.
15. The assembly as claimed in any preceding clause, further comprising the first end spring-loaded and revolvably secured in at least one cross-sectionally U-shaped or V-shaped slot of the turbine nozzle and the first end spring-loaded against and between parallel or non-parallel forward and aft annular walls of the U-shaped or V-shaped slot.
16. The assembly as claimed in any preceding clause, further comprising the axial biasing means including an axially aftwardly opening conical section connecting the first and second seal ends.
17. The assembly as claimed in any preceding clause, further comprising:
   the second seal end including a radially outer aftwardly opening V-shaped cross-sectional bend or a circular cross-sectional bend,
   the first end including a radially inner V-shaped acute cross-sectional bend,
   the radially inner V-shaped acute cross-sectional bend including an annular axially forward leg connected to an axially aftwardly opening conical connecting section,
   the axially aftwardly opening conical connecting section caddy-corner to both the aft annular wall and a bottom wall of the U-shaped or V-shaped slot, and
   the axially aftwardly opening conical connecting section connected to the axially aftwardly opening conical section by a forwardly opening conical intermediate section.
18. The assembly as claimed in any preceding clause, further comprising:
   the first end including a symmetrical radially inner U-shaped bent first seal end,
   the U-shaped first seal end including annular substantially parallel axially spaced apart forward and aft legs connected by a semi-circular cross-sectional bend or cross-sectional U bend therebetween,
   the second seal end including a radially outer aftwardly opening V-shaped cross-sectional bend or a circular cross-sectional bend, and
   an axially aftwardly opening conical section located radially between and connected to the aft leg and the first seal end.
19. The assembly as claimed in any preceding clause, further comprising:
   the first end spring-loaded against and between parallel or non-parallel forward and aft annular walls of the U-shaped or V-shaped slot of the first turbine component,
   the aft annular wall being continuous, and
   the forward annular wall being continuous or the forward annular wall being discontinuous and including circumferentially spaced apart tabs spaced axially apart from the continuous aft annular wall.
20. The assembly as claimed in any preceding clause, further comprising the axial biasing means including a radially inwardly and axially aftwardly bowed section connecting the first and second seal ends and the first and second seal ends being axially and radially circular in cross-section with respect to the centerline axis.

## Claims

1. A gas turbine engine snap in annular spring seal (52) comprising:
a continuous or split full 360 degree ring (79) circumscribed about a centerline axis (12),
the ring (79) including a radially outer second seal end (55) spaced radially outwardly of a radially inner first end (53) of the ring (79), and
an axial biasing means for axially biasing the second seal end (55) apart and away from the first end (53).

2. The seal (52) as claimed in claim 1, further comprising the axial biasing means including an axially aftwardly opening conical section (70) connecting the first and second seal ends (55, 53).

3. The seal (52) as claimed in claim 2, further comprising the second seal end (55) including a radially outer aftwardly opening V shaped cross-sectional bend (66) or a circular cross-sectional bend (67).

4. The seal (52) as claimed in claim 3, further comprising:
the first end (53) including a radially inner V-shaped acute cross-sectional bend (68),
the radially inner V-shaped acute cross-sectional bend (68) including an annular axially forward leg (56) connected to an axially aftwardly opening conical connecting section (74), and
the axially aftwardly opening conical connecting section (74) connected to the axially aftwardly opening conical section (70) by a forwardly opening conical intermediate section (73).

5. The seal (52) as claimed in any of claims 2 to 4, further comprising:
the first end (53) including a symmetrical radially inner U-shaped bent first seal end (83),
the U-shaped first seal end (83) incuding annular substantially parallel axially spaced apart forward and aft legs (56, 58) connected by a semi-circular cross-sectional bend or cross-sectional U bend (60) therebetween,
the second seal end 55 including a radially outer aftwardly opening V shaped cross-sectional bend (66) or a circular cross-sectional bend (67), and
an axially aftwardly opening conical section (70) located radially between and connected to the aft leg (58) and the first seal end (53).

6. The seal (52) as claimed in any preceding claim, further comprising the axial biasing means including a radially inwardly and axially aftwardly bowed section (80) connecting the first and second seal ends (55, 53) and the first and second seal ends (55, 53) being axially and radially circular in cross section with respect to the centerline axis (12).

7. An annular seal assembly (33) comprising:
a gas turbine engine snap in annular spring seal (52) extending radially and circumferentially between and in sealing engagement with first and second annular turbine components (4, 6),
the annular spring seal (52) including a continuous or split full 360 degree ring (79) circumscribed about a centerline axis (12),
the ring (79) including a radially outer second seal end (55) spaced radially outwardly of a radially inner first end (53) of the ring (79), and
an axial biasing means for axially biasing the second seal end (55) apart and away from the first end (53).

8. The assembly (33) as claimed in claim 7, further comprising the first end (53) spring-loaded and revolvably secured in at least one cross-sectionally U-shaped slot (54) of the first turbine component (4).

9. The assembly (33) as claimed in claim 8, further comprising the axial biasing means including an axially aftwardly opening conical section connecting the first and second seal ends.

10. The assembly (33) as claimed in claim 9, further comprising:
the second seal end including a radially outer aftwardly opening V-shaped cross-sectional bend or a circular cross-sectional bend,
the first end including a radially inner V-shaped acute cross-sectional bend,
the radially inner V-shaped acute cross-sectional bend including an annular axially forward leg connected to an axially aftwardly opening conical connecting section, and
the axially aftwardly opening conical connecting section connected to the axially aftwardly opening conical section by a forwardly opening conical intermediate section.

11. The assembly (33) as claimed in either of claim 9 or 10, further comprising:
the first end including a symmetrical radially inner U-shaped bent first seal end,
the U-shaped first seal end including annular substantially parallel axially spaced apart forward and aft legs connected by a semi-circular cross-sectional bend or cross-sectional U bend therebetween,
the second seal end including a radially outer aftwardly opening V-shaped cross-sectional bend or a circular cross-sectional bend, and
an axially aftwardly opening conical section located radially between and connected to the aft leg and the first seal end.

12. The assembly (33) as claimed in any of claims 8 to 11, further comprising:
the first end (53) spring-loaded against and between parallel forward and aft annular walls (62, 64) of the U-shaped slot (54) of the first turbine component (4),
the aft annular wall (64) being continuous, and
the forward annular wall (62) being continuous or the forward annular wall (62) being discontinuous and including circumferentially spaced apart tabs (76) spaced axially apart from the continuous aft annular wall (64).

13. The assembly as claimed in any of claims 8 to 12, further comprising the axial biasing means including a radially inwardly and axially aftwardly bowed section connecting the first and second seal ends and the first and second seal ends being axially and radially circular in cross-section with respect to the centerline axis.
